# FASCICULE DE BREVET EUROPEEN

(11) **EP 2 931 538 B1**
(45) Date de publication et mention de la délivrance du brevet: **19.04.2017**
(21) Numéro de dépôt: 13817665.6
(22) Date de dépôt: 11.12.2013
(51) Int. Cl.: B60C 15/06

(54) **BOURRELET DE PNEUMATIQUE POUR VEHICULE LOURD**
REIFENWULST FÜR SCHWERLASTFAHRZEUG
HEAVY VEHICLE TYRE BEAD

(30) Priorité: 14.12.2012 FR 1262061
(43) Date de publication de la demande: 21.10.2015
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: ESTENNE, Vincent, F-63040 Clermont-Ferrand Cedex 9 (FR)
(74) Mandataire: Millanvois, Patrick Jacques Jean
(86) Numéro de dépôt international: PCT/EP2013/076190
(87) Numéro de publication internationale: WO 2014/090861

(56) Documents cités:
- EP-A1- 1 925 469
- EP-A2- 1 174 289
- FR-A1- 2 840 562
- FR-A1- 2 935 297
- US-A1- 2008 006 360

## Description

La présente invention concerne un pneumatique radial destiné à équiper un véhicule lourd, de type poids lourd, génie civil, métro ou avion.

L'invention concerne plus particulièrement les bourrelets du pneumatique, c'est-à-dire les parties du pneumatique, réunies respectivement par l'intermédiaire de deux flancs à une bande de roulement, qui assurent la liaison mécanique entre le pneumatique et la jante sur laquelle il est monté.

Un pneumatique ayant une géométrie de révolution par rapport à un axe de rotation, sa géométrie peut être décrite dans un plan méridien contenant son axe de rotation. Dans un plan méridien donné, les directions radiale, axiale et circonférentielle désignent respectivement les directions perpendiculaire à l'axe de rotation, parallèle à l'axe de rotation et perpendiculaire au plan méridien. Dans ce qui suit, les expressions « radialement intérieur » et « radialement extérieur» signifient respectivement « plus proche de l'axe de rotation, selon la direction radiale » et « plus éloigné de l'axe de rotation, selon la direction radiale ». Les expressions « axialement intérieur » et « axialement extérieur» signifient respectivement « plus proche du plan équatorial, selon la direction axiale » et « plus éloigné du plan équatorial, selon la direction axiale », le plan équatorial étant le plan perpendiculaire à l'axe de rotation et passant par le milieu de la bande de roulement.

Un pneumatique radial comprend une armature de renforcement, comprenant une armature de sommet, radialement intérieure à la bande de roulement, et une armature de carcasse, radialement intérieure à l'armature de sommet.

L'armature de carcasse d'un pneumatique radial comprend au moins une couche de carcasse. Une couche de carcasse est constituée d'éléments de renforcement, ou renforts, enrobés dans un matériau élastomérique, parallèles entre eux et formant avec la direction circonférentielle un angle sensiblement égal à 90°, c'est-à-dire compris entre 85° et 95°. Une couche de carcasse comprend généralement une partie principale, reliant les deux bourrelets entre eux et s'enroulant, dans chaque bourrelet, autour d'un élément de renforcement circonférentiel le plus souvent métallique appelé tringle, pour former un retournement. La section méridienne d'une tringle, c'est-à-dire la coupe de la tringle par un plan méridien, est circulaire ou inscrite dans un cercle, dont le centre est communément appelé centre de la tringle. La tringle est le plus souvent entourée d'au moins un matériau d'enrobage, tel que, de manière non exhaustive, un matériau élastomérique ou un matériau textile, l'ensemble de la tringle et de son matériau d'enrobage constituant un noyau tringle. Le retournement de la couche de carcasse permet l'ancrage, dans chaque bourrelet, de la couche de carcasse au noyau tringle.

Il est également connu d'avoir, dans chaque bourrelet, une armature additionnelle comprenant au moins une couche additionnelle. Une couche additionnelle comprend des éléments de renforcement, ou renforts, enrobés dans un matériau élastomérique, parallèles entre eux et formant avec la direction circonférentielle un angle généralement au plus égal à 45°, typiquement sensiblement égal à 22°. L'armature additionnelle s'étend radialement entre ses deux extrémités radialement intérieure et extérieure et axialement à l'extérieur du retournement le plus axialement extérieur. On appelle extrémité radialement intérieure de l'armature additionnelle l'extrémité radialement intérieure de la couche additionnelle la plus radialement intérieure. De façon analogue, on appelle extrémité radialement extérieure de l'armature additionnelle l'extrémité radialement extérieure de la couche additionnelle la plus radialement extérieure. La distance radiale entre les extrémités respectivement radialement intérieure et radialement extérieure de l'armature additionnelle est généralement au plus égale à 0.3 fois la hauteur de section théorique du pneumatique définie par la norme de la « European Tyre and Rim Technical Organisation » ou ETRTO. L'armature additionnelle permet de limiter, au niveau du bourrelet, la déradialisation de l'armature de carcasse radiale, c'est-à-dire la variation d'angle des renforts par rapport à leur angle initial sensiblement égal à 90° en raison des déformations circonférentielles des portions de mélange élastomérique comprises entre les renforts : cette limitation de la déradialisation contribue à l'endurance du bourrelet.

Les renforts de couche de carcasse et de couche additionnelle sont généralement soit des câbles métalliques, soit des renforts constitués d'assemblages de filaments textiles, préférentiellement de type polyamide aliphatique ou polyamide aromatique. Dans le cas de renforts constitués d'assemblages de filaments textiles, l'armature de carcasse comprend le plus souvent plusieurs couches de carcasse, dont le nombre est déterminé en fonction du niveau de résistance mécanique requis pour l'armature de carcasse.

Concernant la jante sur laquelle est monté le pneumatique, la partie de jante destinée à entrer en contact avec un bourrelet de pneumatique comprend une portion sensiblement circulaire prolongée radialement vers l'intérieur par une portion sensiblement radiale, constituant le rebord de jante (ou « flange »), destinée à entrer en contact avec la face axialement extérieure du bourrelet et à fixer la position axiale dudit bourrelet lorsque le pneu est monté et gonflé. Elle comprend par ailleurs une portion sensiblement axiale, ou siège de jante (ou « seat »), s'étendant axialement vers l'intérieur à partir de l'extrémité radialement intérieure du rebord de jante, et destinée à entrer en contact avec la face radialement intérieure du bourrelet. Un pneumatique selon l'invention est destiné à être monté sur une jante dont le siège forme un angle de 5° avec la direction axiale.

Au cours du roulage, les bourrelets du pneumatique s'enroulant autour des portions sensiblement circulaires des rebords de jante sont soumis à des cycles de flexion. Ces cycles de flexion entraînent des variations de courbure combinées avec des variations de tension des renforts de couche de carcasse et de couche additionnelle. De plus ces cycles de flexion induisent, dans les matériaux élastomériques présents au voisinage immédiat des extrémités libres des renforts de retournement de carcasse et des extrémités radialement extérieures des renforts de couche additionnelle, des efforts de compression et d'extension qui génèrent des contraintes et des déformations thermomécaniques, susceptibles de générer des fissures dont la propagation peut entraîner une dégradation du pneumatique nécessitant son remplacement.

Le document FR 2055988 a déjà décrit, dans le cas d'une armature de carcasse radiale, des bourrelets dont l'endurance est améliorée en vue de l'allongement de la durée de vie du pneumatique. Chaque bourrelet comprend une armature additionnelle circonférentielle comprenant une ou plusieurs couches additionnelles. Une couche additionnelle, sensiblement parallèle aux couches de carcasse, et adjacente à un retournement de carcasse ou à une partie principale de couche de carcasse, comprend des renforts métalliques ou textiles orientés sensiblement selon la direction circonférentielle, d'où l'appellation d'armature additionnelle circonférentielle. Les renforts sensiblement circonférentiels présentent l'avantage de ne pas avoir d'extrémités radialement extérieures susceptibles de générer des fissurations locales à l'origine de la dégradation du bourrelet. Les renforts circonférentiels peuvent être positionnés selon un pas constant ou variable de façon à optimiser la rigidité d'extension de la couche additionnelle.

Le document FR 2840562 a également déjà décrit, dans le cas d'une armature de carcasse radiale de pneumatique pour véhicules portant de lourdes charges, des bourrelets dont l'endurance est améliorée en vue de l'allongement de la durée de vie du pneumatique. Chaque bourrelet comprend une armature complémentaire de renforcement comprenant deux couches pouvant être respectivement placées axialement à l'intérieur ou à l'extérieur de l'armature de carcasse ou axialement contre le retournement de carcasse.

Le document FR-A-2935297 divulgue un pneumatique pour véhicules lourds comportant au moins deux couches additionnelles dans les bourrelets.

Les inventeurs se sont donnés pour objectif d'optimiser la distance radiale entre les extrémités respectivement radialement intérieure et radialement extérieure d'une armature additionnelle circonférentielle, tout en conservant le niveau d'endurance de bourrelet obtenu avec une telle armature additionnelle circonférentielle.

Cet objectif a été atteint, selon l'invention, par un pneumatique pour véhicule lourd selon la revendication 1.

Le but de l'invention est d'optimiser le positionnement radial des extrémités respectivement radialement intérieure et radialement extérieure de l'armature additionnelle circonférentielle, de façon à ne conserver que la portion d'armature additionnelle circonférentielle efficace sur le plan mécanique, sans dégrader l'endurance du bourrelet. Ceci permet d'optimiser la quantité de matière utilisée pour l'armature additionnelle circonférentielle, c'est-à-dire de la limiter au strict nécessaire.

Pour atteindre cet objectif, en premier lieu, l'extrémité radialement intérieure de l'armature additionnelle circonférentielle doit être radialement positionnée, de façon à ce que sa projection orthogonale sur la face axialement extérieure du bourrelet soit radialement extérieure au centre de la tringle. Comme défini précédemment, l'extrémité radialement intérieure de l'armature additionnelle circonférentielle est l'extrémité radialement intérieure de la couche additionnelle la plus radialement intérieure, dans le cas d'une pluralité de couches additionnelles.

En d'autres termes, la projection orthogonale sur la face axialement extérieure du bourrelet de l'extrémité radialement intérieure de l'armature additionnelle circonférentielle est positionnée radialement à l'extérieur de la droite passant par le centre de la tringle et perpendiculaire à la face axialement extérieure du bourrelet.

Les inventeurs ont montré par calculs par éléments finis que, radialement à l'intérieur de la droite passant par le centre de la tringle et perpendiculaire à la face axialement extérieure du bourrelet, les renforts d'armature additionnelle sont souvent mis en compression et sont donc d'une part mécaniquement inefficaces et d'autre part susceptibles de se rompre en compression.

En second lieu, l'extrémité radialement extérieure de l'armature additionnelle circonférentielle doit être radialement positionnée, de façon à ce que sa projection orthogonale sur la face axialement extérieure du bourrelet soit destinée à entrer en contact avec un point de la jante axialement intérieur au point de dernier contact de la jante, lorsque le pneumatique est monté sur sa jante et gonflé à une pression recommandée. Comme défini précédemment, l'extrémité radialement extérieure de l'armature additionnelle circonférentielle est l'extrémité radialement extérieure de la couche additionnelle la plus radialement extérieure, dans le cas d'une pluralité de couches additionnelles. Le point de dernier contact de la jante est le point de la portion circulaire du rebord de jante, axialement à l'extérieur duquel le bourrelet du pneumatique n'est plus en contact avec la portion circulaire du rebord de jante, lorsque le pneumatique est monté sur sa jante et gonflé à une pression recommandée.

Ainsi l'optimisation de la position radiale de l'extrémité radialement extérieure de l'armature additionnelle circonférentielle est réalisée sur le pneumatique monté sur sa jante, telle que définie par la norme ETRTO, et gonflé à la pression de gonflage recommandée pour une utilisation normale par la norme ETRTO.

Les inventeurs ont montré par calculs par éléments finis que, radialement à l'extérieur du point limite dont la projection orthogonale sur la face axialement du bourrelet est le point de dernier contact de la face axialement du bourrelet avec la portion circulaire du rebord de jante, les renforts d'armature additionnelle sont soumis à des efforts d'extension susceptibles d'entraîner leur rupture en extension.

Enfin, la distance radiale entre l'extrémité radialement intérieure et l'extrémité radialement extérieure de l'armature additionnelle circonférentielle est au plus égale à 20 mm.

Cette distance radiale maximale est la distance radiale au-delà de laquelle l'armature additionnelle circonférentielle n'est plus mécaniquement efficace. Elle permet ainsi de minimiser la quantité de matériau constitutif de ladite armature additionnelle circonférentielle et donc contribue à un coût de fabrication plus faible. Cette distance radiale maximale garantit également un bon positionnement de l'armature additionnelle circonférentielle au cours de la fabrication du pneumatique, d'où un avantage en termes de qualité de fabrication.

Avantageusement, la distance axiale entre l'armature additionnelle circonférentielle et la face axialement extérieure du bourrelet est au moins égale à 2 mm.

Cette distance axiale minimale se traduit par une épaisseur de sécurité de mélange élastomérique entre l'armature additionnelle et la jante. Celle-ci permet de garantir l'intégrité de l'armature additionnelle circonférentielle par rapport aux agressions potentielles extérieures telles que des chocs, des agressions au cours des opérations de montage ou de démontage du pneumatique ainsi que la présence de corps étrangers insérés entre le rebord de jante et le pneumatique.

Selon l'invention, la somme des largeurs des couches additionnelles de l'armature additionnelle circonférentielle est au moins égale à 20 mm.

Egalement selon l'invention, la rigidité tangente d'extension circonférentielle de la ou de chaque couche additionnelle de l'armature additionnelle circonférentielle est au moins égale à 250 daN/mm.

On appelle rigidité tangente d'extension circonférentielle d'une couche additionnelle le produit de l'épaisseur par le module d'extension du matériau constitutif de la couche additionnelle. Cette rigidité d'extension circonférentielle minimale est requise pour assurer le niveau de tension de rigidité totale minimale au gonflage de l'armature additionnelle circonférentielle, dans le but de lutter efficacement contre l'usure de la face axialement extérieure du bourrelet de pneumatique dans la zone de contact avec le rebord de jante. On appelle tension de rigidité le produit de la rigidité tangente d'extension circonférentielle par la largeur cumulée, c'est-à-dire la somme des largeurs des couches additionnelles dans un bourrelet.

Les inventeurs ont montré par calcul que la largeur cumulée des couches additionnelles permet à l'armature additionnelle de développer, dans chaque bourrelet, une tension de rigidité totale minimale au gonflage de l'ordre de 5000 daN, afin de s'opposer efficacement à l'usure de la face axialement extérieure du bourrelet de pneumatique dans la zone de contact avec le rebord de jante. Cette usure résulte des glissements périodiques de la face axialement extérieure du bourrelet de pneumatique par rapport au rebord de jante, lorsque le pneumatique est en roulage.

Selon une première variante relative aux renforts, chaque couche additionnelle de l'armature additionnelle circonférentielle comprend des renforts métalliques.

L'utilisation de renforts métalliques permet d'atteindre facilement la rigidité d'extension minimale requise pour une couche additionnelle donnée.

Avantageusement, les renforts métalliques de chaque couche additionnelle de l'armature additionnelle circonférentielle sont élastiques. Un renfort métallique élastique est caractérisé par un allongement structural Aₛ, résultant du positionnement relatif des fils métalliques constitutifs du renfort métallique sous un faible effort de traction, au moins égal à 1% et un allongement total à rupture Aₜ au moins égal à 4%. En outre, un renfort métallique élastique a généralement un module élastique en extension au plus égal à 150 GPa, et compris usuellement entre 40 GPa et 150 GPa.

L'utilisation de renforts métalliques élastiques permet, grâce à leur comportement mécanique en extension non linéaire, d'absorber plus facilement les déformations circonférentielles d'une couche additionnelle donnée, variables dans la largeur de la couche additionnelle, tout en permettant d'atteindre la rigidité minimale nécessaire requise pour la couche additionnelle. Par ailleurs, ce type de renforts facilite également la fabrication du pneumatique, par une conformation plus aisée de l'armature additionnelle lors du passage d'une position cylindrique à une position toroïdale.

Selon une deuxième variante relative aux renforts, chaque couche additionnelle de l'armature additionnelle circonférentielle comprend des renforts en polyamide aromatique. Un polyamide aromatique usuel est l'aramide.

Des renforts en polyamide aromatique permettent d'atteindre la rigidité minimale requise pour la couche additionnelle, tout en limitant la masse de cette couche additionnelle.

Selon une troisième variante, la au moins une couche additionnelle de l'armature additionnelle circonférentielle comprend des renforts constitués de polyamide aromatique et de polyamide aliphatique. Un polyamide aromatique usuel est l'aramide et un polyamide aliphatique usuel est le nylon. Des renforts constitués de polyamide aromatique et de polyamide aliphatique, et plus précisément d'un assemblage de filés de filaments soit en polyamide aromatique soit polyamide aliphatique, sont connus sous l'appellation de renforts hybrides.

Des renforts constitués de polyamide aromatique et de polyamide aliphatique permettent également d'atteindre la rigidité minimale requise pour la couche additionnelle, tout en limitant la masse de cette couche additionnelle. De façon analogue aux renforts métalliques élastiques, leur comportement mécanique en extension non linéaire permet d'absorber plus facilement les déformations circonférentielles d'une couche additionnelle donnée, variables dans la largeur de la couche additionnelle.

Selon l'invention, l'armature additionnelle circonférentielle comprend au moins deux couches additionnelles.

En effet, le critère de tension de rigidité minimale au gonflage de l'armature additionnelle est plus difficilement atteignable avec une seule couche additionnelle, surtout dans le cas de renforts non métalliques ou non aromatiques. La présence d'au moins deux couches additionnelles est plus avantageuse.

Selon l'invention, les au moins deux couches additionnelles de l'armature additionnelle circonférentielle sont juxtaposées, c'est-à-dire adjacentes selon au moins un bord.

Sous réserve des contraintes de conformation de l'armature additionnelle circonférentielle au cours de la fabrication, c'est-à-dire lors du passage d'une position cylindrique à une position toroïdal, cette disposition permet de minimiser l'épaisseur de l'armature additionnelle circonférentielle entre le rebord de jante et l'armature de carcasse.

Selon une variante, les au moins deux couches additionnelles de l'armature additionnelle circonférentielle sont totalement superposées, ce qui implique qu'elles sont de même largeur.

Cette disposition permet de minimiser l'impact des contraintes de conformation de l'armature additionnelle circonférentielle au cours de la fabrication, sur l'homogénéité de la distribution des tensions de l'armature additionnelle circonférentielle, en contrepartie d'un sur-épaississement local de l'armature additionnelle circonférentielle.

Selon une autre variante, les au moins deux couches additionnelles de l'armature additionnelle circonférentielle sont au moins en partie superposées. Elles sont alors dites tuilées.

Concernant le procédé de fabrication d'un pneumatique pour véhicule lourd, et, en particulier, l'étape de pose de chaque couche additionnelle de l'armature additionnelle circonférentielle, deux modes de réalisation sont possibles.

Selon un premier mode de réalisation, le procédé de fabrication d'un pneumatique pour véhicule lourd comprend une étape de pose de chaque couche additionnelle de l'armature additionnelle circonférentielle par enroulement hélicoïdal d'un renfort continu.

Ce procédé présente l'avantage de minimiser le nombre d'extrémités libres du renfort constitutif de chaque couche additionnelle de l'armature additionnelle circonférentielle.

Selon un deuxième mode de réalisation, le procédé de fabrication d'un pneumatique pour véhicule lourd comprend une étape de pose de chaque couche additionnelle de l'armature additionnelle circonférentielle par enroulement hélicoïdal d'au moins une bandelette constituée de renforts continus parallèles entre eux.

Par rapport au premier mode de réalisation cité précédemment, le temps de pose à cru de l'armature additionnelle circonférentielle est réduit à proportion du nombre de fils constitutifs de la bandelette.

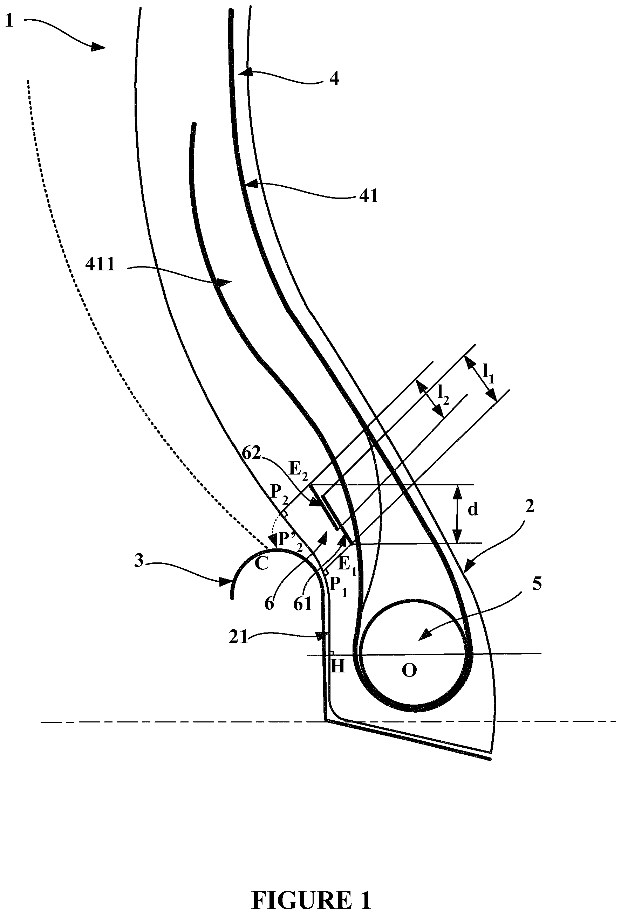

Les caractéristiques de l'invention seront mieux comprises à l'aide de la description de la figure 1 qui présente une vue en coupe dans un plan méridien d'un bourrelet d'un pneumatique pour véhicule poids lourd, selon un mode de réalisation préféré de l'invention.

La figure 1 n'est pas représentée à l'échelle pour en faciliter la compréhension.

Sur la figure 1, est représenté un bourrelet 2 de pneumatique 1 pour véhicule lourd selon l'invention. Le bourrelet 2 est destiné à entrer en contact avec une jante 3 par au moins une face axialement extérieure 21.

L'armature de carcasse radiale 4 est constituée d'une couche de carcasse 41 s'enroulant dans le bourrelet 2, autour d'une tringle 5 ayant un centre O, pour former un retournement 411.

L'armature additionnelle circonférentielle 6 comprend deux couches additionnelles (61, 62). L'armature additionnelle circonférentielle 6 s'étend radialement depuis une extrémité radialement intérieure E₁ jusqu'à une extrémité radialement extérieure E₂ et axialement à l'extérieur du retournement 411. Dans le cas de la figure 1, les deux couches additionnelles (61, 62) de l'armature additionnelle circonférentielle 6 sont en partie superposées : elles sont dites tuilées. L'extrémité radialement intérieure E₁ de l'armature additionnelle circonférentielle 6 est l'extrémité radialement intérieure de la couche additionnelle 61 la plus radialement intérieure, alors que l'extrémité radialement extérieure E₂ de l'armature additionnelle circonférentielle 6 est l'extrémité radialement extérieure de la couche additionnelle 62 la plus radialement extérieure. Les extrémités respectivement radialement intérieure E₁ et radialement extérieure E₂ de l'armature additionnelle circonférentielle 6 sont positionnées l'une par rapport à l'autre à une distance radiale d. Les couches additionnelles (l1, l2) ont des largeurs respectives l₁ et l₂ qui sont des largeurs curvilignes mesurées selon le profil des couches dans un plan méridien.

Conformément à l'invention, la projection orthogonale P₁ de l'extrémité radialement intérieure E₁ de l'armature additionnelle circonférentielle 6 sur la face axialement extérieure 21 du bourrelet 2 est radialement extérieure au centre O de la tringle 5. En d'autres termes, la projection orthogonale P₁ sur la face axialement extérieure 21 du bourrelet 2 de l'extrémité radialement intérieure E₁ de l'armature additionnelle circonférentielle 6 est positionnée radialement à l'extérieur de la droite OH passant par le centre O de la tringle 5 et perpendiculaire au point H à la face axialement extérieure 21 du bourrelet 2.

La projection orthogonale P₂ de l'extrémité radialement extérieure E₂ de l'armature additionnelle circonférentielle 6 sur la face axialement extérieure 21 du bourrelet 2 est destinée à entrer en contact avec un point P'₂ de la jante 3 axialement intérieur au point C de dernier contact de la jante 3, lorsque le pneumatique 1 est monté sur sa jante 3 et gonflé à une pression recommandée. Le profil du bourrelet de pneumatique monté et gonflé est représenté sur la figure 1 en traits pointillés.

L'invention a été plus particulièrement étudiée dans le cas d'un pneumatique de dimension 305/75R20 destiné à équiper un métro.

Dans cette dimension, l'armature additionnelle circonférentielle est constituée de deux couches additionnelles en parties superposées ou tuilées. L'armature additionnelle circonférentielle est réalisée par enroulement hélicoïdal de deux tours d'une bandelette. La bandelette est constituée de renforts aramide de construction 167/2, c'est-à-dire constitués de deux brins de 167 tex retordus ensemble, ces renforts étant répartis selon une densité égale à 98 fils/dm.

Des simulations numériques ont été réalisées sur trois pneumatiques comprenant trois configurations de bourrelet différentes, pour évaluer leurs impacts respectifs sur l'usure au portage:
- un premier pneumatique comprenant des bourrelets sans armature additionnelle,
- un deuxième pneumatique dit « classique » comprenant des bourrelets avec une armature additionnelle comprenant des renforts métalliques formant un angle de 22° avec la direction circonférentielle, l'armature additionnelle étant caractérisée par une rigidité tangente d'extension circonférentielle égale à 250 daN/mm et par une distance radiale entre l'extrémité radialement intérieure et l'extrémité radialement extérieure de l'armature additionnelle circonférentielle égale à 20 mm,
- un troisième pneumatique selon l'invention comprenant des bourrelets avec une armature additionnelle circonférentielle constituée de deux couches additionnelles de renforts aramide, l'armature additionnelle étant caractérisée par une rigidité tangente d'extension circonférentielle égale à 1200 daN/mm et par une distance radiale entre l'extrémité radialement intérieure et l'extrémité radialement extérieure de l'armature additionnelle circonférentielle égale à 10 mm.

Le paramètre retenu pour estimer l'intensité de l'usure au portage que l'armature additionnelle est censée combattre est l'amplitude de déplacement circonférentiel cyclique maximal (exprimé en mm) des points du bourrelet en contact avec la jante dans un contact supposé parfaitement glissant. L'usure au portage sera d'autant plus limitée que cette amplitude de déplacement circonférentiel cyclique maximal sera plus faible.

Pour le premier pneumatique comprenant des bourrelets sans armature additionnelle, l'amplitude de déplacement circonférentiel cyclique maximal calculée est égale à 4,7 mm. Pour le deuxième pneumatique comprenant des bourrelets avec une armature additionnelle comprenant des renforts métalliques formant un angle de 22° avec la direction circonférentielle, l'amplitude de déplacement circonférentiel cyclique maximal calculée est égale à 3,2 mm. Enfin, pour le troisième pneumatique selon l'invention comprenant des bourrelets avec une armature additionnelle circonférentielle constituée de deux couches additionnelles de renforts aramide, l'amplitude de déplacement circonférentiel cyclique maximal calculée est égale à 3,8 mm. L'amplitude de déplacement circonférentiel cyclique maximal calculée pour le troisième pneumatique selon l'invention est donc intermédiaire entre celles calculées respectivement pour les premier et deuxième pneumatiques : cette valeur est considérée comme suffisante pour obtenir une usure au portage limitée de façon satisfaisante.

L'invention ne doit pas être interprétée comme étant limitée à ce qui précède mais peut être étendue à d'autres modes de réalisation, tels que, par exemple et de manière non exhaustive, des armatures additionnelles comprenant des couches additionnelles dont les renforts sont espacés d'un pas constant ou variable, sont fractionnés ou ondulés.

## Revendications

1. - Pneumatique (1) pour véhicule lourd comprenant:
- deux bourrelets (2) destinés à entrer en contact avec une jante (3) respectivement par au moins une face axialement extérieure (21),
- une armature de carcasse radiale (4) comprenant au moins une couche de carcasse (41) s'enroulant dans chaque bourrelet (2), autour d'une tringle (5) ayant un centre (O), pour former un retournement (411),
- une armature additionnelle circonférentielle (6), dans chaque bourrelet (2), comprenant au moins deux couches additionnelles (61, 62) ayant chacune une largeur (l₁, l₂), l'armature additionnelle (6) s'étendant radialement depuis une extrémité radialement intérieure (E₁) jusqu'à une extrémité radialement extérieure (E₂) et axialement à l'extérieur du retournement (411) le plus axialement extérieur, les au moins deux couches additionnelles (61, 62) de l'armature additionnelle circonférentielle (6) étant juxtaposées, **caractérisé en ce que**
- la projection orthogonale (P₁) de l'extrémité radialement intérieure (E₁) de l'armature additionnelle circonférentielle (6) sur la face axialement extérieure (21) du bourrelet (2) est radialement extérieure au centre (O) de la tringle (5),
- la projection orthogonale (P₂) de l'extrémité radialement extérieure (E₂) de l'armature additionnelle circonférentielle (6) sur la face axialement extérieure (21) du bourrelet (2) est destinée à entrer en contact avec un point (P'₂) de la jante (3) axialement intérieur au point (C) de dernier contact de la jante (3), lorsque le pneumatique (1) est monté sur sa jante (3) et gonflé à une pression recommandée, **en ce que** la somme des largeurs (l₁, l₂) des couches additionnelles (61, 62) de l'armature additionnelle circonférentielle (6) est au moins égale à 20 mm, les largeurs étant des largeurs curvilignes mesurées selon le profil des couches dans un plan méridien, **en ce que** la rigidité tangente d'extension circonférentielle de chaque couche additionnelle (61, 62) de l'armature additionnelle circonférentielle (6) est au moins égale à 250 daN/mm, la rigidité tangente d'extension circonférentielle d'une couche additionnelle étant le produit de l'épaisseur par le module d'extension du matériau constitutif de la couche additionnelle, et **en ce que** la distance radiale (d) entre l'extrémité radialement intérieure (E₁) et l'extrémité radialement extérieure (E₂) de l'armature additionnelle circonférentielle (6) est au plus égale à 20 mm.

2. - Pneumatique (1) pour véhicule lourd selon la revendication 1, **caractérisé en ce que** chaque couche additionnelle (61, 62) de l'armature additionnelle circonférentielle (6) comprend des renforts métalliques.

3. - Pneumatique (1) pour véhicule lourd selon la revendication 1, **caractérisé en ce que** chaque couche additionnelle (61, 62) de l'armature additionnelle circonférentielle (6) comprend des renforts en polyamide aromatique.

4. - Pneumatique (1) pour véhicule lourd selon la revendication 1, **caractérisé en ce que** chaque couche additionnelle (61, 62) de l'armature additionnelle circonférentielle (6) comprend des renforts constitués de polyamide aromatique et de polyamide aliphatique.

5. - Pneumatique (1) pour véhicule lourd selon l'une des quelconque des revendications 1 à 4, **caractérisé en ce que** les au moins deux couches additionnelles (61, 62) de l'armature additionnelle circonférentielle (6) sont au moins en partie superposées.

6. - Pneumatique (1) pour véhicule lourd selon l'une des quelconque des revendications 1 à 5 , **caractérisé en ce que** les au moins deux couches additionnelles (61, 62) de l'armature additionnelle circonférentielle (6) sont totalement superposées.

## Patentansprüche

1. Luftreifen (1) für Schwerlastfahrzeug, der Folgendes umfasst:
- zwei Wulste (2), die dazu vorgesehen sind, mit einer Felge (3) jeweils über wenigstens eine axial äußere Fläche (21) in Kontakt zu gelangen,
- eine radiale Karkassenbewehrung (4), die wenigstens eine Karkassenschicht (41) aufweist, die in jedem Wulst (2) um ein Drahtseil (5) mit Zentrum (O) gewickelt ist, um eine Umkehrung (411) zu bilden,
- eine zusätzliche Umfangsbewehrung (6) in jedem Wulst (2), die wenigstens zwei zusätzliche Schichten (61, 62) aufweist, wovon jede eine Breite (l₁, l₂) besitzt, wobei sich die zusätzliche Bewehrung (6) radial von einem radial inneren Ende (E₁) bis zu einem radial äußeren Ende (E₂) und axial außerhalb der Umkehrung (411) bis zu dem axial äußersten Punkt erstreckt, wobei die wenigstens zwei zusätzlichen Schichten (61, 62) der zusätzlichen Umfangsbewehrung (6) nebeneinander angeordnet sind,
**dadurch gekennzeichnet, dass**
- die senkrechte Projektion (P₁) des radial inneren Endes (E₁) der zusätzlichen Umfangsbewehrung (6) auf die axial äußere Fläche (21) des Wulstes (2) sich radial außerhalb des Zentrums (O) des Drahtseils (5) befindet,
- die senkrechte Projektion (P₂) des radial äußeren Endes (E₂) der zusätzlichen Umfangsbewehrung (6) auf die axial äußere Fläche (21) des Wulstes (2) so bestimmt ist, mit einem Punkt (P'₂) der Felge (3), der sich axial innerhalb des Punkts (C) des letzten Kontakts der Felge (3) befindet, in Kontakt zu gelangen, wenn der Luftreifen (1) an seiner Felge (3) montiert ist und auf einen Nenndruck aufgeblasen ist,
dass die Summe der Breiten (l₁, l₂) der zusätzlichen Schichten (61, 62) der zusätzlichen Umfangsbewehrung (6) wenigstens gleich 20 mm ist, wobei die Breiten gekrümmte Breiten sind, die längs des Profils der Schichten in einer Mittelebene gemessen werden,
dass die tangentiale Starrheit der Umfangsdehnung jeder zusätzlichen Schicht (61, 62) der zusätzlichen Umfangsbewehrung (6) wenigstens gleich 250 daN/mm ist, wobei die tangentiale Starrheit der Umfangsdehnung einer zusätzlichen Schicht das Produkt aus der Dicke mit dem Dehnungsmodul des konstitutiven Materials der zusätzlichen Schicht ist, und
dass der radiale Abstand (d) zwischen dem radial inneren Ende (E₁) und dem radial äußeren Ende (E₂) der zusätzlichen Umfangsbewehrung (6) höchstens gleich 20 mm ist.

2. Luftreifen (1) für Schwerlastfahrzeug nach Anspruch 1, **dadurch gekennzeichnet, dass** jede zusätzliche Schicht (61, 62) der zusätzlichen Umfangsbewehrung (6) Metallverstärkungen enthält.

3. Luftreifen (1) für Schwerlastfahrzeug nach Anspruch 1, **dadurch gekennzeichnet, dass** jede zusätzliche Schicht (61, 62) der zusätzlichen Umfangsbewehrung (6) Verstärkungen aus aromatischem Polyamid enthält.

4. Luftreifen (1) für Schwerlastfahrzeug nach Anspruch 1, **dadurch gekennzeichnet, dass** jede zusätzliche Schicht (61, 62) der zusätzlichen Umfangsbewehrung (6) Verstärkungen, die aus aromatischem Polyamid und aus aliphatischem Polyamid gebildet sind, enthält.

5. Luftreifen (1) für Schwerlastfahrzeug nach einem der Ansprüche 1 bis 4, **dadurch gekennzeichnet, dass** die wenigstens zwei zusätzlichen Schichten (61, 62) der zusätzlichen Umfangsbewehrung (6) wenigstens teilweise einander überlagert sind.

6. Luftreifen (1) für Schwerlastfahrzeug nach einem der Ansprüche 1 bis 5, **dadurch gekennzeichnet, dass** die wenigstens zwei zusätzlichen Schichten (61, 62) der zusätzlichen Umfangsbewehrung (6) vollständig einander überlagert sind.

## Claims

1. Heavy vehicle tyre (1) comprising:
- two beads (2) intended to come into contact with a rim (3) respectively via at least one axially outer face (21),
- a radial carcass reinforcement (4) comprising at least one carcass layer (41) wound within each bead (2) around a bead wire (5) having a centre (O) to form a turnup (411),
- an additional circumferential reinforcement (6), in each bead (2), comprising at least two additional layers (61, 62) each having a width (L₁, L₂), the additional reinforcement (6) extending radially from a radially inner end (E₁) as far as a radially outer end (E₂) and axially on the outerside of the axially outermost turnup (411), the at least two additional layers (61, 62) of the additional circumferential reinforcement (6) being juxtaposed,
**characterized in that** the orthogonal projection (P₁) of the radially inner end (E₁) of the additional circumferential reinforcement (6) onto the axially outer face (21) of the bead (2) is radially on the outside of the centre (O) of the bead wire (5),
- the orthogonal projection (P₂) of the radially outer end (E₂) of the additional circumferential reinforcement (6) onto the axially outer face (21) of the bead (2) is intended to come into contact with a point (P'₂) of the rim (3) that is axially on the inside of the point (C) of last contact of the rim (3) when the tyre (1) is mounted on its rim (3) and inflated to a recommended pressure,
**in that** the sum of the widths (l₁, l₂) of the additional layers (61, 62) of the additional circumferential reinforcement (6) is at least equal to 20 mm, the widths being curved widths measured along the profile of the layers in a meridian plane,
**in that** the circumferential tensile tangent stiffness of each additional layer (61, 62) of the additional circumferential reinforcement (6) is at least equal to 250 daN/mm, the circumferential tensile tangent stiffness of an additional layer being the product of the thickness times the tensile modulus of the material of which the additional layer is made, and
**in that** the radial distance (d) between the radially inner end (E₁) and the radially outer end (E₂) of the additional circumferential reinforcement (6) is at most equal to 20 mm.

2. Heavy vehicle tyre (1) according to Claim 1, **characterized in that** each additional layer (61, 62) of the additional circumferential reinforcement (6) comprises metal reinforcers.

3. Heavy vehicle tyre (1) according to Claim 1, **characterized in that** each additional layer (61, 62) of the additional circumferential reinforcement (6) comprises reinforcers made of aromatic polyamide.

4. Heavy vehicle tyre (1) according to Claim 1, **characterized in that** each additional layer (61, 62) of the additional circumferential reinforcement (6) comprises reinforcers made of aromatic polyamide and of aliphatic polyamide.

5. Heavy vehicle tyre (1) according to any one of Claims 1 to 4, **characterized in that** the at least two additional layers (61, 62) of the additional circumferential reinforcement (6) are at least partially superposed.

6. Heavy vehicle tyre (1) according to any one of Claims 1 to 5, **characterized in that** the at least two additional layers (61, 62) of the additional circumferential reinforcement (6) are fully superposed.
